(19) Europäisches Patentamt
European Patent Office
Office européen des brevets

(11) **EP 3 227 644 B1**

(12) **FASCICULE DE BREVET EUROPEEN**

(45) Date de publication et mention de la délivrance du brevet:
**10.07.2019 Bulletin 2019/28**

(51) Int Cl.:
*G01D 21/00* (2006.01)     *G06Q 10/06* (2012.01)
*G06Q 50/04* (2012.01)

(21) Numéro de dépôt: **15817476.3**

(22) Date de dépôt: **04.12.2015**

(86) Numéro de dépôt international:
**PCT/FR2015/053334**

(87) Numéro de publication internationale:
**WO 2016/087802 (09.06.2016 Gazette 2016/23)**

(54) **PROCÉDÉ DE FABRICATION DE PIÈCES BASÉ SUR L'ANALYSE D'INDICATEURS STATISTIQUES EN SITUATION D'ALLÈGEMENT DE CONTRÔLE**

VERFAHREN ZUR HERSTELLUNG VON TEILEN BASIEREND AUF DER ANALYSE VON STATISTISCHEN INDIKATOREN IN EINER SITUATION MIT VERRINGERTER KONTROLLE

METHOD OF MANUFACTURING PARTS, BASED ON THE ANALYSIS OF STATISTICAL INDICATORS IN A SITUATION OF DIMINISHED CONTROL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **05.12.2014 FR 1462000**

(43) Date de publication de la demande:
**11.10.2017 Bulletin 2017/41**

(73) Titulaire: **SAFRAN AIRCRAFT ENGINES**
**75015 Paris (FR)**

(72) Inventeurs:
• **FERRY, Olivier**
  **77550 Moissy-Cramayel (FR)**
• **CAMBEFORT, Arnaud**
  **77550 Moissy-cramayel (FR)**
• **COURTIN, Pascal**
  **77550 Moissy-cramayel (FR)**
• **HARDOUIN, Nicolas**
  **77550 Moissy-cramayel (FR)**
• **CLERET DE LANGAVANT, Charles**
  **77550 Moissy-cramayel (FR)**

(74) Mandataire: **Regimbeau**
  **20, rue de Chazelles**
  **75847 Paris Cedex 17 (FR)**

(56) Documents cités:
**US-A- 5 655 110**

**Description**

DOMAINE DE L'INVENTION

L'invention concerne le domaine des indicateurs statistiques en milieu industriel, par exemple dans l'industrie aéronautique, en particulier pour faciliter le suivi et le contrôle de la fabrication d'un flux de pièces.

ETAT DE LA TECHNIQUE

La fabrication de pièces, notamment mécaniques, en milieu industriel se heurte à deux contraintes opposées, à savoir l'augmentation des cadences et volumes de fabrication d'une part, et l'augmentation des niveaux de qualité requis d'autre part, ce qui est en particulier vrai dans le domaine aéronautique. Le document US5655110 donne un exemple de contrôle qualité régulant la cadence d'une chaîne de production.

Il est aujourd'hui impossible d'effectuer des contrôles qualité pour la totalité des pièces fabriquées sauf à nuire considérablement à la cadence de fabrication. On utilise donc en général des indicateurs statistiques de la fabrication, permettant de déduire une information globale sur la qualité de l'ensemble des pièces fabriquées à partir d'information spécifiques de la qualité d'un nombre fini de pièces prélevées en tant qu'échantillon.

Outre les contrôles en fin de production qui peuvent être faits sur des échantillons ayant un nombre limité de pièces, il est généralement également effectué des contrôles en cours de production de manière à pouvoir éventuellement piloter le flux de production, c'est-à-dire ajuster les conditions de fabrication pour s'assurer que les pièces fabriquées continuent de répondre aux critères de qualités requis. Dans certains cas, ces contrôles statistiques en cours de production peuvent amener à stopper complètement la production, notamment si les pièces produites présentent des défauts de qualité trop importants et que le flux de fabrication doit être réinitialisé entièrement.

Les contrôles qualité sont faits en relation à une ou plusieurs dimensions caractéristiques des pièces qui sont fabriquées. Cette dimension caractéristique peut être par exemple une cote particulière de la pièce, sa masse, ou toute autre caractéristique mesurable desdites pièces.

Pour effectuer les contrôles statistiques, on prélève successivement plusieurs échantillons, chaque échantillon comprenant plusieurs pièces du flux de fabrication, et on mesure ensuite la dimension caractéristique de chaque pièce de l'échantillon prélevé. A partir des différentes mesures de la dimension caractéristique des pièces de l'échantillon prélevé, on calcule la valeur d'un indicateur statistique préalablement choisi pour suivre la qualité du flux de fabrication.

Il existe divers indicateurs statistiques pouvant être utilisés afin de suivre l'évolution d'un flux de fabrication de pièces, chaque indicateur statistique donnant des informations différentes permettant d'ajuster les conditions de fabrication d'une manière ou d'une autre.

La plupart des indicateurs statistiques utilisés pour le suivi d'un processus industriel de fabrication sont calculés à partir d'une moyenne $\mu$ et d'un écart-type $\sigma$ de la dimension caractéristique mesurée sur plusieurs pièces. Plus précisément, $\mu$ correspond à la moyenne du décentrage mesuré pour la dimension caractéristique par rapport à la valeur de référence pour cette dimension caractéristique.

Le processus de fabrication peut par exemple être piloté en étudiant des indices de capabilité qui caractérisent la performance réelle du procédé par rapport à la performance souhaitée. De tels indices permettent en effet de mesurer la capacité du processus de fabrication à réaliser des pièces dont les dimensions caractéristiques sont comprises dans un intervalle de tolérance IT souhaité. L'intervalle de tolérance IT est l'écart entre les valeurs extrêmes admissibles de la dimension caractéristique, étant donc calculé comme la différence entre la tolérance supérieure TS et la tolérance inférieure TI de la dimension caractéristique mesurée, soit IT = TS - TI.

On peut par exemple se référer à l'indice de capabilité Cpk qui représente la dispersion mais également le centrage de la production par rapport aux limites de la tolérance. Dans ce cas, lorsque l'indice de capabilité Cpk est élevé, cela signifie que la production est répétable et qu'elle est en outre bien centrée dans l'intervalle de tolérance IT, c'est-à-dire qu'il y aura moins de risque que des pièces soient fabriquées en dehors des tolérances. L'indice de capabilité Cpk est défini généralement par la formule :

$$\text{Cpk} = \frac{\text{Min}(\text{TS} - \mu \,;\, \mu - \text{TI})}{3\sigma}$$

Le principal intérêt du Cpk est que lorsque la répartition de la production suit une loi normale, la valeur du Cpk de la population produite est directement liée à la proportion de non-conformités produites. Plus précisément, lorsque l'indice de capabilité mesuré pour l'ensemble d'une production donnée est égal à une valeur $\widetilde{\text{Cpk}}$, la proportion (exprimée en parties par million, notés ppm) de pièces produites avec une valeur supérieure à TS ou inférieure à TI pour la dimension caractéristique, c'est-à-dire la proportion de pièces en non-conformité, vaut au maximum :

$$P_{ppm} = 10^6 \left[ 1 - \text{LOI. NORMALE. STANDARD}(3 * \widetilde{Cpk}) + \text{LOI. NORMALE. STANDARD}(-3 * \widetilde{Cpk}) \right]$$

Par exemple, un indice de capabilité Cpk égal à 1 correspond à environ 2700 ppm de pièces en non-conformité, tandis qu'un indice de capabilité Cpk égal à 1.33 correspond à environ 66 ppm de pièces en non-conformité.

Comme indiqué plus haut, comme les contrôles sont coûteux et sans valeur ajoutée sur la pièce, on ne contrôle en général qu'une partie de la production globale. Pour ce faire, on prélève un échantillon de n pièces, on mesure la dimension caractéristique sur ces n pièces, et calcule sur ces n valeurs mesurées un indice de capabilité Cpk qu'on espère être représentatif de celui de la population produite toute entière. Bien entendu, plus le nombre de pièces prélevées n est grand, et plus le degré de confiance dans cette représentativité est élevé.

Pour quantifier cette confiance, il existe des formules approchées donnant en fonction du nombre de pièces n mesurées et de l'indice de capabilité Cpk mesuré, que l'on note $\widetilde{Cpk}$, les bornes de l'intervalle de confiance sur cette mesure d'indice de capabilité à un seuil de confiance $\alpha$ donné.

La plus couramment utilisée est la formule de Kushler, qui permet de calculer les bornes inférieures de l'intervalle de confiance sur l'indice de capabilité Cpk à un risque unilatéral $\alpha$ près ($\alpha \in [0; 1]$).

Selon cette formule, donné un indice de capabilité mesuré sur n pièces, noté $\widetilde{Cpk}$, on court un risque $\alpha$ que l'indice de capabilité Cpk de la population réelle soit inférieur à $\widetilde{Cpk}\left[ 1 + z_\alpha \sqrt{\frac{1}{9n\widetilde{Cpk}^2} + \frac{1}{2(n-1)}} \right]$, où $z_\alpha$ représente le $\alpha^{ème}$ percentile de la loi normale centrée réduite.

Par exemple, on a 5% de chance que l'indice de capabilité Cpk réel de la population soit inférieur à $\widetilde{Cpk}\left[ 1 - 1.645 \sqrt{\frac{1}{9n\widetilde{Cpk}^2} + \frac{1}{2(n-1)}} \right]$.

Dans la pratique, on compare généralement la valeur calculée de la borne inférieure de l'intervalle de confiance unilatéral à 5% sur l'indice de capabilité mesuré à la valeur de l'indice de capabilité minimum acceptable, noté $Cpk_{mini}$, spécifiée par le concepteur ou les procédures de qualité de l'entreprise.

Dans ces conditions, étant donnée la mesure d'un indice de capabilité noté $\widetilde{Cpk}$ sur un échantillon de n pièces, le niveau de qualité de la production est jugé satisfaisant, au regard des incertitudes pesant sur la représentativité de l'échantillon prélevé à la condition que :

$$\widetilde{Cpk}\left[ 1 - 1.645 \sqrt{\frac{1}{9n\widetilde{Cpk}^2} + \frac{1}{2(n-1)}} \right] > Cpk_{mini}.$$

Ce mode de contrôle permet de fournir un cadre clair et simple sur la manière de procéder pour prendre en compte les incertitudes liées à l'échantillonnage dans la sanction finale (acceptable ou non acceptable) qui sera rendue à l'issue de l'analyse des mesures effectuées, et permettra ou non la poursuite de l'allègement de contrôle, tout en participant au pilotage de l'outil de production.

Au moyen d'une sévérisation (le remplacement de la valeur $\widetilde{Cpk}$ par la borne inférieure de l'intervalle de confiance unilatéral à 5% sur cette mesure $C^pk$ 1 - $1.645 \sqrt{\frac{1}{9n\widetilde{Cpk}^2} + \frac{1}{2(n-1)}}$ ), on se prémunit à chaque analyse contre un risque de 5% que l'échantillon prélevé paraisse acceptable alors que la production réelle pourrait être non acceptable. En d'autres termes, on se prémunit contre un risque de non-représentativité d'un échantillon qui fournirait une image de la production plus optimiste que la réalité effective des pièces livrées sans avoir été mesurées.

Le problème de ce mode de fonctionnement est qu'il conduit à imposer des sévérisations très importantes. Par exemple lorsque la valeur minimale de l'indice de capabilité $Cpk_{mini}$ vaut 1 (ce qui signifie que l'on tolère 2700 ppm de pièces en non-conformité) et que l'on souhaite avoir un allègement à 50 pièces par période (ce qui représente tout de même un nombre important de contrôles), la valeur de l'indice de capabilité mesuré $\widetilde{Cpk}$ suivant ce mode de fonctionnement sera jugée acceptable sous la condition que $\widetilde{Cpk}\left[1 - 1.645\sqrt{\frac{1}{9n\widetilde{Cpk}^2} + \frac{1}{2(n-1)}}\right] > 1,$ soit $\widetilde{Cpk} > 1.22,$ ce qui correspond à 252 ppm de pièces en non-conformité. Ainsi, alors que la spécification tolère 2700 ppm de pièces en non-conformité, on devra produire continuellement à un taux de non-conformité dix fois inférieur pour pouvoir rester durablement allégeable au taux pourtant relativement élevé de 50 pièces par période.

Un but de la présente invention est donc de fournir un procédé de de fabrication de pièces basé sur l'analyse d'au moins un indicateur statistique, qui permet de remédier aux inconvénients précités.

Plus spécifiquement, un but de la présente invention est de fournir un procédé de fabrication de pièces basé sur l'analyse d'au moins un indicateur statistique qui permet un allégement de contrôle fiable et plus précis.

Encore un but de la présente invention est de fournir un procédé de fabrication de pièces basé sur l'analyse d'au moins un indicateur statistique avec une sévérisation réduite, tout en garantissant un allégement de contrôle au moins aussi fiable.

EXPOSE DE L'INVENTION

A cette fin, on propose un procédé de fabrication d'une population de pièces basé sur l'analyse d'au moins un indicateur statistique représentatif d'une dimension caractéristique des pièces, selon lequel :

a) On prélève par des pièces produites avec un dispositif de fabrication un échantillon comprenant un nombre n de pièces ;
b) On mesure la dimension caractéristique de chaque pièce de l'échantillon, et on calcule pour l'échantillon une valeur mesurée de l'indicateur statistique ;
c) On calcule une espérance mathématique de la proportion de pièces en non-conformité par rapport à une spécification sur la dimension caractéristique, ledit calcul étant effectué à partir de la valeur mesurée de l'indicateur statistique pour l'échantillon prélevé et du nombre n de pièces de l'échantillon ;
d) On compare l'espérance mathématique de la proportion de pièces en non-conformité calculée à une valeur seuil de proportion de pièces en non-conformité ;
e) On pilote la production des pièces en fonction des résultats de comparaison de l'étape d).

Chacune des étapes présentées est automatisée. L'étape de mesure de la dimension caractéristique peut être faite avec un dispositif de mesure, comprenant par exemple des capteurs permettant de réaliser une mesure automatisée de dimensions spécifiques de la pièce.

Les étapes de calcul peuvent être faites par tout dispositif de calcul approprié, tel que par exemple des moyens de traitement de données informatiques, tel qu'un ordinateur.

L'étape de pilotage peut par exemple être réalisée par un dispositif de pilotage intégrant des moyens de traitement pour intégrer et traiter les données issues des étapes de calcul, afin de corriger tout écart détecté dans la production et corriger le flux de production. En particulier, le dispositif de pilotage est prévu pour corriger les paramètres d'entrée du dispositif de production dont sont issues les pièces.

Le dispositif de pilotage vient donc de préférence ajuster les paramètres de réglage du dispositif de fabrication utilisé pour fabriquer les pièces afin par exemple de réduire l'écart entre la valeur de l'indicateur statistique et une valeur de référence.

De manière plus générale, on cherche à optimiser l'écart entre la valeur de l'indicateur statistique et la valeur de référence pour que la production des pièces soit conforme aux exigences du cahier des charges associé. On modifie les paramètres de production pour modifier, resp. corriger, l'écart identifié entre la valeur de l'indicateur statistique et la valeur de référence. En fonction de l'indicateur statistique utilisé, optimiser l'écart pourra par exemple consister à réduire l'écart identifié.

Des aspects préférés mais non limitatifs de ce procédé, pris seuls ou en combinaison, sont les suivants :

- à l'étape c), on calcule en outre un intervalle de confiance sur l'indicateur statistique à un risque unilatéral $\alpha$ près, où $\alpha$ est compris entre 0 et 1, ledit calcul étant effectué à partir de la valeur mesurée de l'indicateur statistique pour l'échantillon prélevé et du nombre n de pièces de l'échantillon ; et à l'étape d), on compare en outre la borne inférieure de l'intervalle de confiance calculé à une valeur seuil de l'indicateur statistique correspondant à la valeur seuil de proportion de pièces en non-conformité.
- à l'étape e) :

∘ Si la borne inférieure de l'intervalle de confiance calculé est supérieure à la valeur seuil de l'indicateur statistique, alors on n'effectue aucune modification au flux de fabrication de pièces ;

∘ Si la borne inférieure de l'intervalle de confiance calculé est inférieure à la valeur seuil de l'indicateur statistique et que l'espérance mathématique de la proportion de pièces en non-conformité calculée pour l'échantillon est supérieure à la valeur seuil de proportion de pièces en non-conformité, alors on effectue des actions correctives sur le flux de fabrication de pièces, par exemple en ajustant des paramètres de réglage du dispositif de fabrication, et/ou on augmente le nombre de pièces prélevées lors d'un prélèvement ultérieur d'échantillon ;

∘ Si l'espérance mathématique de la proportion de pièces en non-conformité calculée pour l'échantillon est inférieure à la valeur seuil de proportion de pièces en non-conformité, alors on stoppe le flux de fabrication de pièces.

- le au moins un indicateur statistique est un indice de capabilité Cpk défini par la formule :

$$Cpk = \frac{Min(TS - \mu \, ; \, \mu - TI)}{3\sigma}$$

où :

∘ $\mu$ est la moyenne des dimensions caractéristiques mesurées sur les pièces de l'échantillon prélevé ;
∘ $\sigma$ est l'écart-type des dimensions caractéristiques mesurées sur les pièces de l'échantillon prélevé ;
∘ TS est une tolérance supérieure de la dimension caractéristique mesurée ;
∘ TI est une tolérance inférieure de la dimension caractéristique mesurée.

- à l'étape c), on prend pour hypothèse que la population des pièces suit une loi normale, et on effectue les calculs suivants :

c1) Calcul de la fonction de répartition inverse $G_{ppm}$ de la proportion de pièces en non-conformité que l'on risque d'accepter en ne connaissant que la valeur mesurée $\widetilde{Cpk}$ de l'indice de capabilité sur la dimension caractéristique pour l'échantillon de n pièces, selon la formule :

$$G_{ppm} = 10^6 \left[ 1 - LOI.NORMALE.STANDARD \left( 3 * \widetilde{Cpk} \left[ 1 + z_\alpha \sqrt{\frac{1}{9n\widetilde{Cpk}^2} + \frac{1}{2(n-1)}} \right] \right) \right.$$
$$\left. + LOI.NORMALE.STANDARD \left( -3 * \widetilde{Cpk} \left[ 1 + z_\alpha \sqrt{\frac{1}{9n\widetilde{Cpk}^2} + \frac{1}{2(n-1)}} \right] \right) \right]$$

où $\alpha$ E [0; 1] et $z_\alpha$ représente le $\alpha^{ème}$ percentile de la loi normale standard ;
c2) Calcul de l'espérance mathématique de la proportion de pièces en non-conformité en prenant l'intégrale entre 0 et 1 de la fonction de répartition inverse $G_{ppm}$ selon $\alpha$.

- à l'étape c), on prend pour hypothèse que la population des pièces suit une loi normale, et on détermine l'espérance mathématique de la proportion de pièces en non-conformité à partir d'un calcul de la densité de probabilité de la proportion de pièces en non-conformité, où :

∘ On considère que le risque d'avoir $X_0$ ppm de pièces en non-conformité dans la population globale correspond à un indice de capabilité donné par la formule :

$$Cpk_0 = \frac{1}{3} LOI.NORMALE.STANDARD.INVERSE \left( 1 - \frac{X_0}{2.10^6} \right))$$

∘ On détermine la densité de probabilité de la proportion de pièces en non-conformité en se basant sur un percentile p de l'intervalle de confiance calculé à partir de la valeur mesurée $\widetilde{Cpk}$ de l'indice de capabilité sur la dimension caractéristique pour l'échantillon de n pièces selon la formule :

$$p = LOI.NORMALE.STANDARD(\frac{Cpk_0 - \widetilde{Cpk}}{\sqrt{\frac{1}{9n\widetilde{Cpk}^2} + \frac{1}{2(n-1)}}})$$

- à l'étape c), on prend pour hypothèse que la population des pièces suit une loi normale, et on effectue les calculs suivants :

  c1) Simulation d'une pluralité de tirages de population réelle à partir d'une moyenne $\tilde{\mu}$ et d'un écart-type $\tilde{\sigma}$ de la dimension caractéristique mesurée sur l'échantillon de n pièces en prenant pour hypothèse que la variable aléatoire $\sqrt{n}\left(\frac{\tilde{\mu}-\mu}{\tilde{\sigma}}\right)$ suit une loi de Student à $n$ - 1 degrés de liberté, et que la variable aléatoire $(n-1)\frac{\tilde{\sigma}^2}{\sigma^2}$ est distribuée suivant une loi du $\chi^2$ à $n$ - 1 degrés de liberté, où $\mu$ et $\sigma$ sont respectivement la moyenne réelle et l'écart-type réel de la dimension caractéristique pour la population ; puis
  c2) Calcul de la proportion de pièces en non-conformité pour chaque tirage simulé, et calcul de la moyenne de la proportion de pièces en non-conformité sur l'ensemble des tirages simulés pour en déduire l'espérance mathématique de la proportion de pièces en non-conformité.

- le flux de fabrication de pièces correspond à un lot ayant un nombre de pièces $N_0$ déterminé, où :

  ◦ A l'étape a), le nombre de pièces n prélevées pour former l'échantillon est inférieur au nombre $N_0$ de pièces du lot ;
  ◦ A l'étape c), on calcule en outre une moyenne de la proportion de pièces en non-conformité dans le lot en pondérant le nombre de pièces de l'échantillon mesurées en conformité par la valeur 0, en pondérant le nombre de pièces de l'échantillon mesurées en non-conformité par la valeur de l'espérance mathématique calculée, et en pondérant le nombre de pièces du lot non-prélevées dans l'échantillon par la valeur de l'espérance mathématique calculée ;
  ◦ A l'étape d), on compare la moyenne de la proportion de pièces en non-conformité dans le lot à la valeur seuil de proportion de pièces en non-conformité ;
  ◦ A l'étape e), on accepte ou on refuse le lot de pièces produites en fonction des résultats de comparaison de l'étape d).

DESCRIPTION DES FIGURES

D'autres caractéristiques et avantages de l'invention ressortiront encore de la description qui suit, laquelle est purement illustrative et non limitative et doit être lue en regard des dessins annexés, sur lesquels :

- la figure 1 est un tableau présentant les valeurs seuils en termes d'indice de capabilité Cpk en fonction de la taille de l'échantillon, pour une spécification d'indice de capabilité minimum égal à 1.
- la figure 2 est un tableau présentant les valeurs seuils en termes d'indice de capabilité Cpk en fonction de la taille de l'échantillon, pour une spécification d'indice de capabilité minimum égal à 1.33.
- La figure 3 est un graphique illustrant l'évolution des valeurs seuils en termes d'indice de capabilité Cpk en fonction de la taille de l'échantillon, pour une spécification d'indice de capabilité minimum égal à 1.
- La figure 4 est un graphique illustrant l'évolution des valeurs seuils en termes d'indice de capabilité Cpk en fonction de la taille de l'échantillon, pour une spécification d'indice de capabilité minimum égal à 1.33.
- La figure 5 est un graphique illustrant la fonction de répartition inverse de la proportion de pièces en non-conformité pour un indice de capabilité mesuré de 1.51 sur un échantillon de 50 pièces ;
- La figure 6 est un graphique illustrant la densité de probabilité de la proportion de pièces en non-conformité pour un indice de capabilité mesuré de 1.51 sur un échantillon de 50 pièces ;
- La figure 7 est un graphique illustrant la densité de probabilité de la proportion de pièces en non-conformité pour un indice de capabilité mesuré de 1.1 sur un échantillon de 50 pièces ;

- La figure 8 est un graphique représentant les simulations de plusieurs tirages représentant dans le plan ($\mu$ ; $\sigma$) les positions potentielles de la population réelle.
- La figure 9 est un schéma illustrant une chaine de production intégrant un contrôle et pilotage de la production avec échantillonnage de pièces.

DESCRIPTION DETAILLEE DE L'INVENTION

Le principe de l'invention se base sur le fait que ce n'est pas parce qu'un échantillon ne respecte pas strictement le critère statistique sévérisé requis pour une dimension caractéristique, que l'ensemble de la population ne pourra pas en moyenne vérifier la spécification imposant de produire une proportion de pièces en non-conformité inférieure à un certain seuil imposé.

Reprenons l'exemple plus haut de l'art antérieur où, avec des échantillons de 50 pièces, on impose d'avoir un indice de capabilité mesuré supérieur à 1.22 pour être certain que l'ensemble de la population de pièces satisfasse l'exigence d'un indice de capabilité minimum égal à 1. Des simulations, de type tirage de Monte-Carlo par exemple, des populations réelles que l'on est susceptible d'avoir produites lorsque la mesure d'un échantillon de 50 pièces donne un indice de capabilité mesuré d'une valeur de 1.06 (c'est-à-dire bien inférieur à la valeur minimale de 1.22 tolérée par l'état de l'art) montrent que l'acceptation répétée de populations ayant un indice de capabilité mesuré de 1.06 sur 50 pièces permet de vérifier en moyenne, c'est-à-dire sur de longues périodes, la spécification imposant de produire moins de 2700 ppm de pièces en non-conformité. Parfois la proportion de pièces en non-conformité dans la population livrée se trouvera supérieure à 2700, mais ces situations sont compensées par les périodes au cours desquelles la proportion de non-conformités est inférieure. Selon cet exemple, il n'est pas dangereux vis-à-vis de la spécification tolérant 2700 ppm de non-conformités d'accepter de manière répétée des lots de pièces sur la base de la mesure d'un indice de capabilité supérieur ou égal à 1.06 sur des échantillons de 50 pièces, puisque les non-conformités éventuelles seront compensées en moyenne. Ainsi, la valeur pour l'indice de capabilité mesuré de 1.22 qui faisait référence dans l'état de l'art antérieur peut par conséquent être abaissée à 1.06 (lorsque le critère minimal de l'indice de capabilité sans allègement de contrôle est égale à 1), ce qui représente un saut quantitatif important.

On propose donc de suivre la production des pièces en se fondant sur un calcul d'espérance de la proportion de pièces en non-conformité. On compare ensuite cette espérance de la proportion de pièces en non-conformité à un seuil de pièces en non-conformité acceptables pour piloter la production en conséquence.

Ainsi, le suivi d'un flux de fabrication d'une population de pièces basé sur l'analyse d'au moins un indicateur statistique représentatif d'une dimension caractéristique des pièces, peut se dérouler selon les étapes successives suivantes :

a) On prélève dans le flux de fabrication de pièces un échantillon comprenant un nombre n de pièces ;
b) On mesure la dimension caractéristique de chaque pièce de l'échantillon, et on calcule pour l'échantillon une valeur mesurée de l'indicateur statistique ;
c) On calcule une espérance mathématique de la proportion de pièces en non-conformité par rapport à une spécification sur la dimension caractéristique, ledit calcul étant effectué à partir de la valeur mesurée de l'indicateur statistique pour l'échantillon prélevé et du nombre n de pièces de l'échantillon ;
d) On compare l'espérance mathématique de la proportion de pièces en non-conformité calculée à une valeur seuil de proportion de pièces en non-conformité ;
e) On pilote le flux de fabrication des pièces en fonction des résultats de comparaison de l'étape d).

L'espérance mathématique d'une variable aléatoire réelle correspond à la valeur que l'on s'attend à trouver, en moyenne, si l'on répète un grand nombre de fois la même expérience aléatoire. Elle correspond à une moyenne pondérée des valeurs que peut prendre cette variable.

On peut également prévoir de suivre la production en ayant deux valeurs comparatives pour affiner le pilotage du flux de production. La première valeur peut ainsi correspondre, comme dans l'art antérieur, à la borne inférieure de l'intervalle de confiance sur l'indicateur statistique à un risque unilatéral $\alpha$ près, qui si elle est respectée garantit que la production en cours est conforme. La deuxième valeur correspond comme proposé à l'espérance mathématique de la proportion de pièces en non-conformité calculée, qui permet d'agir plus finement sur le pilotage de la production.

Ainsi, dans le processus de suivi de la production, on peut à l'étape c), calculer en outre un intervalle de confiance sur l'indicateur statistique à un risque unilatéral $\alpha$ près, où $\alpha$ est compris entre 0 et 1, ledit calcul étant effectué à partir de la valeur mesurée de l'indicateur statistique pour l'échantillon prélevé et du nombre n de pièces de l'échantillon. Dans ce cas, à l'étape d), on compare en outre la borne inférieure de l'intervalle de confiance calculé à une valeur seuil de l'indicateur statistique correspondant à la valeur seuil de proportion de pièces en non-conformité.

Le pilotage de la production selon ce mode de réalisation pourrait être le suivant :

- Si la borne inférieure de l'intervalle de confiance calculé est supérieure à la valeur seuil de l'indicateur statistique, alors on n'effectue aucune modification au flux de fabrication de pièces (mode de pilotage 1) ;
- Si la borne inférieure de l'intervalle de confiance calculé est inférieure à la valeur seuil de l'indicateur statistique et que l'espérance mathématique de la proportion de pièces en non-conformité calculée pour l'échantillon est supérieure à la valeur seuil de proportion de pièces en non-conformité, alors on effectue des actions correctives sur le flux de fabrication de pièces et/ou on augmente le nombre de pièces prélevées lors d'un prélèvement ultérieur d'échantillon (mode de pilotage 2) ;
- Si l'espérance mathématique de la proportion de pièces en non-conformité calculée pour l'échantillon est inférieure à la valeur seuil de proportion de pièces en non-conformité, alors on stoppe le flux de fabrication de pièces (mode de pilotage 3).

Tout comme pour les intervalles de confiance, la valeur de l'espérance mathématique de la proportion de pièces en non-conformité dépend du nombre de pièces contrôlées : plus ce nombre est élevé et plus l'incertitude liée à la représentativité de l'échantillonnage est faible, et donc moins il sera nécessaire de sévériser la valeur minimale de l'indicateur statistique à prouver sur l'échantillon.

Le reste de la description est fait en référence à l'indice de capabilité Cpk comme indicateur statistique utilisé dans le suivi de la production du flux de pièces, mais l'enseignement de l'invention n'est pas limité à cet indicateur statistique et pourra être adapté à d'autres indicateurs statistiques classiquement utilisés dans le suivi de productions industrielles.

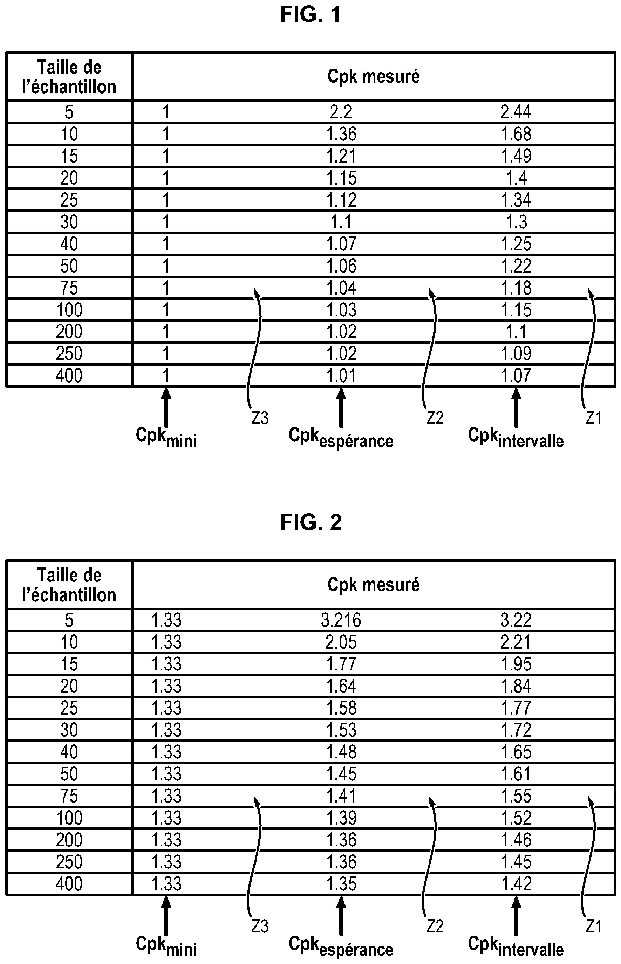

Le tableau de la figure 1 présente les valeurs seuils en termes d'indice de capabilité Cpk (ce tableau pourrait également être présenté en fonction des proportions seuil de pièces en non-conformité), la valeur $Cpk_{intervalle}$ étant la valeur seuil d'indice de capabilité selon l'intervalle de confiance à 5% et la valeur $Cpk_{espérance}$ étant la valeur seuil d'indice de capabilité selon l'espérance mathématique de la proportion de pièces en non-conformité. La valeur minimale d'indice de capabilité $Cpk_{mini}$ pour l'ensemble de la population est fixée ici à 1.

On constate sur le tableau de la figure 1 que les valeurs seuil évoluent en fonction du nombre de pièces n dans l'échantillon.

Le tableau de la figure 2 est semblable au tableau de la figure 1 mais présente les valeurs seuil correspondant à une valeur minimale d'indice de capabilité $Cpk_{mini}$ pour l'ensemble de la population est fixée ici à 1.33.

Les tableaux des figures 1 et 2 illustrent également différentes zones facilitant le pilotage de du flux de production comme décrites ci-dessus. Ainsi, les zones Z1, Z2, et Z3 correspondent par exemple respectivement au mode de pilotage 1, mode de pilotage 2, et mode de pilotage 3.

On peut également représenter ces sévérisations sous forme de graphique illustrant, en fonction du nombre de pièces mesurées, la valeur d'indice de capabilité minimale à prouver pour être en zone 1 ou zone 2.

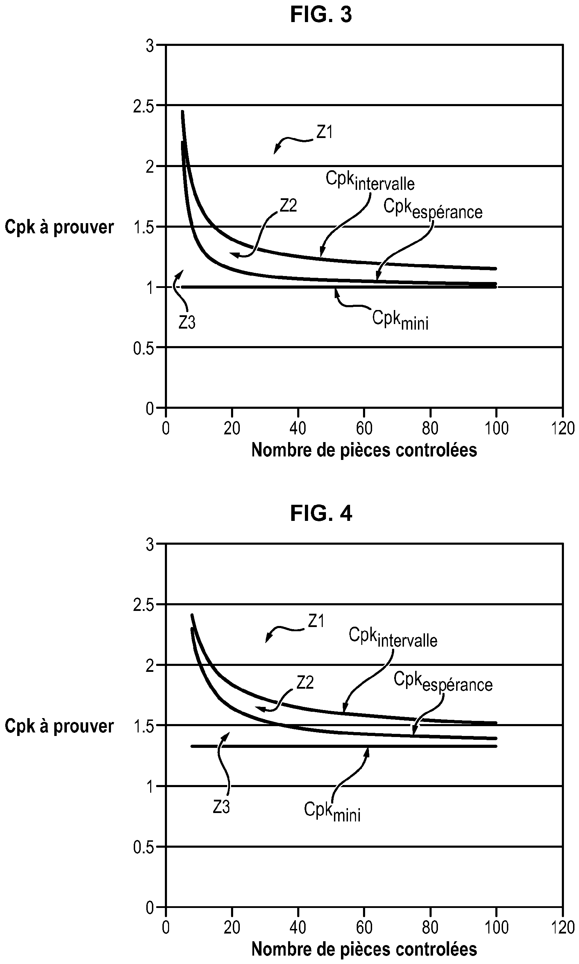

Le graphique de la figure 3 correspond à une telle représentation pour une spécification d'indice de capabilité globale $Cpk_{mini} = 1$.

Le graphique de la figure 4 correspond à une telle représentation pour une spécification d'indice de capabilité globale $Cpk_{mini} = 1.33$.

Selon le procédé proposé, on effectue donc un calcul pour déterminer l'espérance mathématique de la proportion de pièces en non-conformité potentiellement engendrée par une situation dans laquelle on a mesuré un indice de capabilité donné sur un échantillon contenant un nombre de pièces donné.

Pour un prélèvement donné caractérisé par un nombre de pièces n prélevées dans l'échantillon et un indice de capabilité calculé, on cherche donc à quantifier, en nombre de pièces en non-conformité engendrées (en ppm), l'espérance du risque pris lorsqu'on accepte la population toute entière. L'enjeu est d'établir une sanction intermédiaire (correspondant au mode de pilotage 2 par exemple) lorsque l'espérance du risque engendré sera inférieure à la proportion de pièces en non-conformité tolérées par la spécification.

Il existe plusieurs possibilités pour calculer cette espérance mathématique. Nous allons ci-dessous décrire trois méthodes différentes, qui peuvent être mises en oeuvre indépendamment les unes des autres, ou en parallèle si l'on souhaite avoir une estimation moyennée de l'espérance mathématique.

On entend par densité de probabilité la fonction permettant de quantifier la probabilité d'effectuer un tirage dans une plage de valeurs donnée. Plus cette fonction possède une valeur élevée dans une plage de données considérée, et plus les valeurs tirées seront densément réparties dans la plage de données en question après un grand nombre de tirages. Dans la suite de cet exposé nous la noterons f.

On entend par fonction de répartition la fonction associant à chaque valeur possible de résultat la probabilité d'effectuer un tirage inférieur à cette valeur. Nous la noterons dans la suite F. Elle est égale à la primitive de f qui s'annule

$$F(x_0) = \int_{-\infty}^{x_0} f(t)dt.$$

en -∞, et se calcule par conséquent de la façon suivante :

Enfin, on entend par inverse de la fonction de répartition (ou fonction de répartition inverse) la fonction associant à chaque probabilité $p$ la plus petite valeur de tirage $X_0$ telle que la probabilité de tirer une valeur inférieure à $X_0$ soit égale à $p$. Nous la noterons $G$. Elle est définie par la relation : $G(t) = inf\{x \in R : F(x) \geq t\}$.

Pour une variable aléatoire $U$ de loi uniforme sur [0; 1] et $F$ une fonction de répartition donnée, on sait que la variable aléatoire $G(U)$ a pour fonction de répartition $F$.

En corollaire, si $X$ suit une loi de probabilité caractérisée par une densité de probabilité $f_X$, une fonction de

$$Espérance(X) = \int_0^1 G_X(t)dt.$$

répartition $F_X$ et une fonction de répartition inverse $G_X$, alors on a l'égalité :

La première méthode de calcul proposée est basée sur le calcul fonction de répartition inverse $G_{ppm}$ de la

proportion de pièces en non-conformité que l'on risque d'accepter en ne connaissant que la valeur mesurée $\widetilde{Cpk}$ de l'indice de capabilité sur la dimension caractéristique pour l'échantillon de n pièces.

Nous allons décrire cette méthode sur un exemple particulier, qui sera aisément généralisable à une taille d'échantillon quelconque et un indice de capabilité quelconque. Selon cet exemple, on a mesuré sur 50 pièces une

valeur $\widetilde{Cpk}$ de l'indice de capabilité égale à 1.51. La population globale des pièces du flux de production est supposée normale. La proportion maximale de non-conformités autorisées est fixée à 66 ppm (Cpk = 1.33).

Sous l'hypothèse de normalité de la population, on sait convertir un indice de capabilité Cpk en une proportion de pièces en non-conformité engendrées dans l'hypothèse pénalisante d'une loi centrée :

$$P_{ppm} =$$
$$10^6[1 - LOI.NORMALE.STANDARD(3 * Cpk) + LOI.NORMALE.STANDARD(-3 * Cpk)])$$

et réciproquement :

$$Cpk = \frac{1}{3}LOI.NORMALE.STANDARD.INVERSE(1 - \frac{P_{ppm}}{2.10^6})$$

La formule de Kushler permet de calculer les bornes inférieures de l'intervalle de confiance sur l'indice de capabilité Cpk au risque unilatéral $\alpha$ près ($\alpha \in$ [0; 1]). Etant donné un indice de capabilité $\widetilde{Cpk}$ mesuré sur $n$ pièces, on court un risque $\alpha$ que l'indice de capabilité Cpk de la population réelle soit inférieur à

$$\widetilde{Cpk}\left[1 + z_\alpha\sqrt{\frac{1}{9n\widetilde{Cpk}^2} + \frac{1}{2(n-1)}}\right],$$

où $z_\alpha$ représente le $\alpha^{ème}$ percentile de la loi normale standard.

Par exemple, on a 5% de chance que l'indice de capabilité Cpk réel de la population soit inférieur à

$$\widetilde{Cpk}\left[1 - 1.645\sqrt{\frac{1}{9n\widetilde{Cpk}^2} + \frac{1}{2(n-1)}}\right].$$

On en déduit que la fonction de répartition inverse de la proportion de pièces en non-conformité que l'on risque d'accepter lorsque l'on tolère la livraison d'un lot duquel on ne connaît qu'un indice de capabilité $\widetilde{Cpk}$ mesuré sur $n$ pièces est la fonction qui à $\alpha \in$ [0; 1] associe :

$$G_{ppm} = 10^6\left[1 - LOI.NORMALE.STANDARD\left(3 * \widetilde{Cpk}\left[1 + z_\alpha\sqrt{\frac{1}{9n\widetilde{Cpk}^2} + \frac{1}{2(n-1)}}\right]\right) + \right.$$
$$\left. LOI.NORMALE.STANDARD(-3 * \widetilde{Cpk}\left[1 + z_\alpha\sqrt{\frac{1}{9n\widetilde{Cpk}^2} + \frac{1}{2(n-1)}}\right])\right].$$

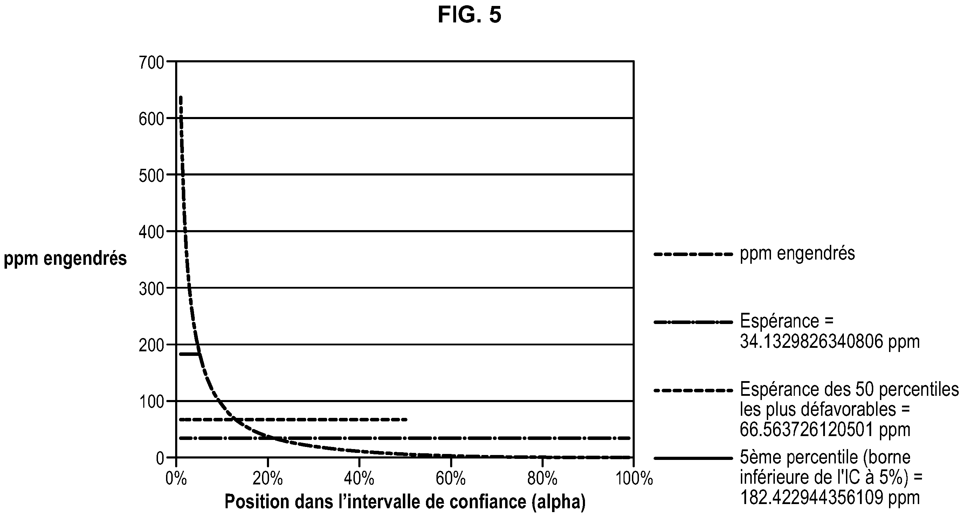

Dans le cas de notre exemple où $\widetilde{Cpk} = 1.51$ et $n$ = 50, on peut représenter graphiquement cette fonction de répartition inverse comme illustré à la figure 5.

Conformément au corollaire présenté ci-dessus, l'espérance recherchée se calcule comme étant égale à la valeur de l'intégrale entre 0 et 1 de la fonction de répartition inverse de notre variable aléatoire.

Pour notre exemple particulier, l'espérance mathématique calculée selon cette première méthode vaut environ 34 ppm.

La deuxième méthode de calcul proposée est basée sur un calcul de la densité de probabilité de la proportion de pièces en non-conformité.

A partir de la formule de Kushler, il est également possible de représenter l'allure de la densité de probabilité de la variable aléatoire étudiée, en effectuant un raisonnement inverse à celui développé pour la première méthode.

Un risque d'avoir $X_0$ ppm de pièces en non-conformité dans la population globale correspond à

$$Cpk_0 = \frac{1}{3} LOI.NORMALE.STANDARD.INVERSE(1 - \frac{X_0}{2.10^6})).$$

Le percentile de la loi normale correspondant dans la formule de Kushler vaut :

$$z_0 = \frac{Cpk_0 - \widetilde{Cpk}}{\sqrt{\frac{1}{9n\widetilde{Cpk}^2} + \frac{1}{2(n-1)}}}.$$

On en déduit qu'on se situe dans le percentile de l'intervalle de confiance p = LOI. NORMALE. STANDARD($z_0$) ; et il est ensuite possible à partir de nombreux calculs de valeurs différentes pour p de différencier p par rapport au nombre de ppm engendrés pour obtenir la valeur de la densité de probabilité recherchée.

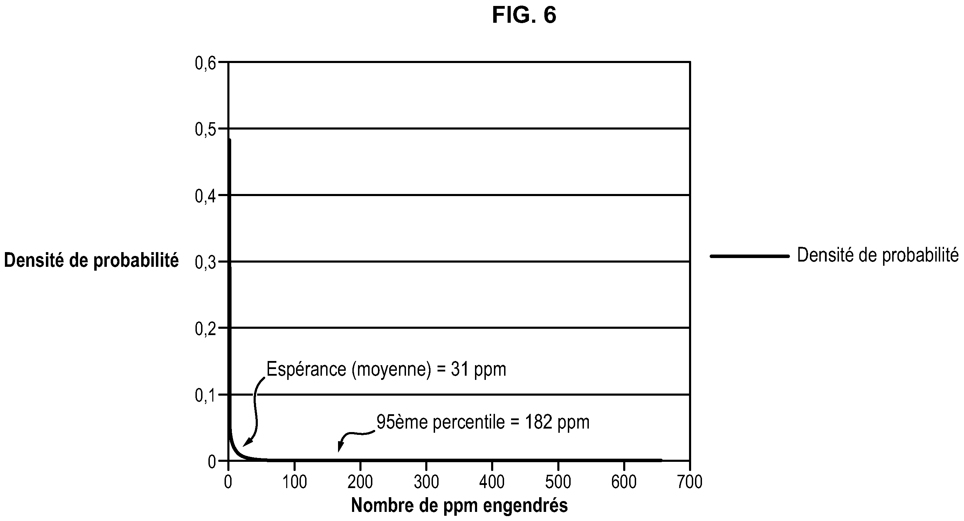

Dans le cas de notre exemple où $\widetilde{Cpk} = 1.51$ et n = 50, on peut représenter graphiquement cette densité de probabilité comme illustré à la figure 6.

Pour notre exemple particulier, l'espérance mathématique calculée selon cette deuxième méthode vaut environ 31 ppm.

La différence de 3 ppm observée entre les deux méthodes est à mettre sur le compte des imprécisions d'intégration et sur le fait que seule une plage finie de ppm engendrés a été prise en compte dans la seconde méthode, regroupant seulement un peu plus de 99% de l'ensemble des densités de probabilité (ce qui signifie que l'aire sous la courbe de la figure 6, dans le domaine sur lequel elle est tracée, est seulement égale à 0.9904).

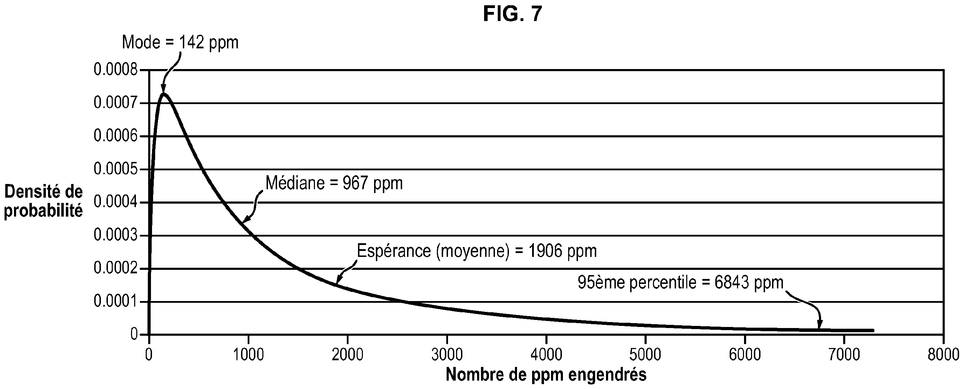

A titre d'illustration, et pour faciliter la compréhension du phénomène, nous pouvons également représenter la densité de probabilité de notre variable aléatoire dans le cas $\widetilde{Cpk} = 1.1$ et n = 50. Cette représentation est illustrée graphiquement à la figure 7.

Dans ce cas précis, si la spécification tolère 2700 ppm de pièces en non-conformité, cette population aurait été rejetée dans l'état antérieur de la technique, car le 95ème percentile se situe à 6843 ppm, bien au-delà du maximum toléré. Or on voit bien que l'espérance reste malgré cela bien inférieure à 2700 ppm (d'ailleurs la médiane et le mode sont encore plus faibles)

La troisième méthode de calcul proposée ne repose plus sur la formule de Kushler, mais sur des tirages aléatoires.

On considère la mesure d'une moyenne $\tilde{\mu}$ et d'un écart-type $\tilde{\sigma}$ donnés sur un échantillon de 50 pièces issues d'une population supposée normale.

En notant respectivement $\mu$ et $\sigma$ la moyenne réelle et l'écart-type réel de la population globale, la variable aléatoire $\sqrt{n}\left(\frac{\tilde{\mu} - \mu}{\tilde{\sigma}}\right)$ suit une loi de Student à n - 1 degrés de liberté, et la variable aléatoire $(n-1)\frac{\tilde{\sigma}^2}{\sigma^2}$ est distribuée suivant une loi du $\chi^2$ à n - 1 degrés de liberté.

Ainsi, on peut de simuler plusieurs tirages de population réelle à partir de la seule connaissance que l'on a de l'échantillon.

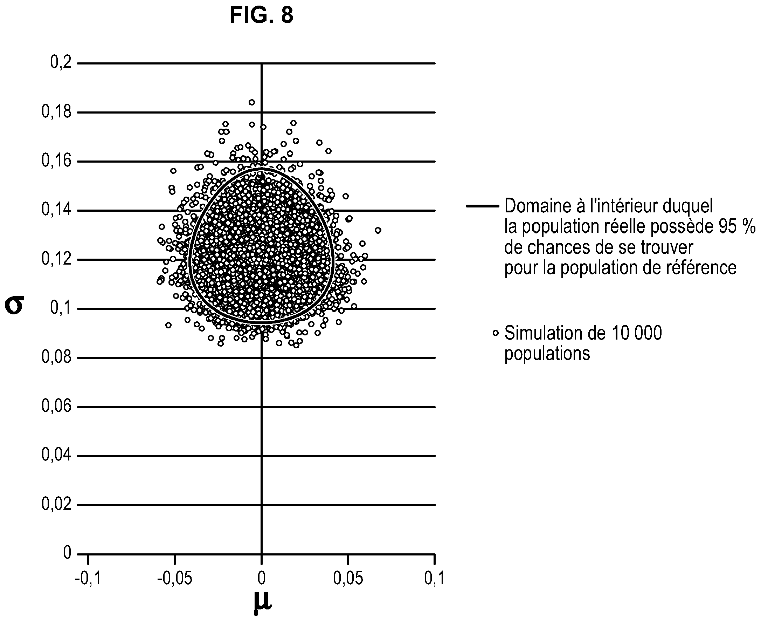

Le graphe de la figure 8 représente ces simulations effectuées sur 10 000 tirages représentant dans le plan $\mu$; $\sigma$ les positions potentielles de la population réelle. Ici la population contrôlée sur 50 pièces a pour moyenne 0 et pour écart-type 0.1167, avec des tolérances à +/-0.53, ce qui représente bien un Cpk de 1.51.

Sur chacune des dix mille populations réelles que l'on a tirées, on peut alors calculer la proportion de non-conformités, puis en calculer la moyenne.

Chaque tirage de 10 000 populations donnera un résultat différent, mais ce nombre moyen de la proportion de pièces en non-conformité engendrées varie entre 37ppm et 42ppm.

La différence avec les deux précédentes méthodes tient au fait que la formule de Kushler sur lesquelles elles reposent ne fournit qu'une approximation, réputée excellente, des bornes de intervalles de confiance sur l'indice de capabilité. En particulier, on voit que les bornes données par la formule de Kushler sont symétriques, ce qui néglige notamment l'asymétrie de la répartition des écarts-types, qui sont plus dispersés vers les fortes valeurs que vers les petites valeurs.

Les résultats des calculs d'espérance mathématique de la proportion de pièces en non-conformité selon ces trois méthodes peuvent se synthétiser selon le tableau suivant :

| | Mesure brute | Borne inférieure de l'intervalle de confiance à 5% sur la mesure : | Espérance du nombre de ppm engendrés calculée par la première méthode | Espérance du nombre de ppm engendrés calculée par la deuxième méthode | Espérance du nombre de ppm engendrés calculée par la troisième méthode |
|---|---|---|---|---|---|
| Cpk | 1.51 | 1.25 | N/A | N/A | N/A |
| ppm engendrés | 5.9 | 182 | 31 | 34 | 39 |

Sachant que selon l'exemple, la cible en terme de pièces en non-conformité tolérées est fixée à 66 ppm (Cpk = 1.33), l'étude réalisée sur le prélèvement de 50 pièces qui a donné pour mesure un indice de capabilité $\widetilde{Cpk}$ nous permet d'affirmer que :

- L'espérance du nombre de pièces en non-conformité que l'on risque d'accepter en tolérant la livraison de la population est bien supérieure à ce que le seul indice de capabilité Cpk donné par la mesure brute sans prise en compte des incertitudes laissait présager (environ 35 ppm contre 5.9 ppm pour la mesure brute) ;
- Si l'on prend pour référence la borne inférieure de l'intervalle de confiance à 5% sur la mesure de l'indice de capabilité Cpk, on trouve un nombre de pièces en non-conformité engendrés égal à 182 ppm, ce qui est bien supérieur à la spécification de 66ppm. Cela laisse penser que la population possède un risque supérieur à 5% d'être non-conforme à la spécification.
- L'espérance du nombre de pièces en non-conformité que l'on risque d'accepter en tolérant la livraison de la population est malgré tout bien inférieure à ce que l'on envisage si l'on prend pour référence la borne inférieure de l'intervalle de confiance à 5% sur la mesure de l'indice de capabilité Cpk (environ 35 ppm contre 182 ppm).
- L'espérance du nombre de pièces en non-conformité que l'on risque d'accepter en tolérant la livraison de la population est inférieure à la spécification (environ 35 ppm contre 66 ppm), ce qui permet d'affirmer qu'en tolérant de façon répétée la livraison de telles populations, la spécification serait respectée sur le volume global de livraison.

Pour toutes ces raisons, il nous semble raisonnable d'accepter la livraison de ce lot, mais selon un mode de pilotage intermédiaire.

Dans l'optique d'une gestion dynamique des prélèvements, il pourra par exemple être demandé pour la période suivante le contrôle d'un nombre plus important de pièces, en vue de mieux caractériser la population livrée et de faire diminuer les risques encourus (avec un niveau accru de prélèvement et à qualité du prélèvement constante, les valeurs renseignées dans les quatre dernières colonnes du tableau ci-dessus diminueront).

En conclusion, au lieu de sanctionner une population caractérisée par prélèvement uniquement sur la base du calcul du 95ème percentile le plus défavorable de l'intervalle de confiance sur l'indice de capabilité Cpk, c'est désormais l'ensemble de sa fonction de répartition qui est prise en compte et rentre en jeu dans le calcul d'une espérance permettant de statuer sur son acceptabilité ou non, et ainsi piloter le processus de production.

Une application supplémentaire du calcul d'espérance proposé peut également être de permettre la libération d'un lot.

Reprenons l'exemple illustré par le graphique de la figure 7, où on a contrôlé 50 pièces et on a trouvé un Cpk égal à 1.1.

Le calcul d'espérance exposé plus haut permet d'établir que l'espérance de la proportion de pièces en non-conformité parmi les pièces non contrôlées est de 1906ppm.

Si le lot contient 75 pièces (50 contrôlées et 25 non contrôlées) et que l'on n'a détecté aucune non-conformité parmi les pièces contrôlées, alors l'espérance de la proportion totale de pièces non conformes dans le lot est de (50*0+25*1906)/(50+25) = 635ppm.

Si la spécification exige d'avoir moins de 700 ppm de non-conformités parmi les pièces livrées (ce qui correspond à un indice de capabilité Cpk de 1.14), on en déduit que le lot pourra être libéré car le risque en jeu, exprimé en termes de non-conformités produites, est inférieur à celui toléré par la spécification.

Ainsi, cela permet d'alléger les contrôles, alors même que le Cpk mesuré (1.1) est inférieur à celui spécifié (1.14). Dans l'état antérieur de l'art, ce lot aurait bien entendu été refusé sans contrôle supplémentaire.

Ainsi, dans un flux de fabrication de pièces correspond à un lot ayant un nombre de pièces $N_0$ déterminé, on peut adapter le procédé de suivi présenté de la manière suivante:

- A l'étape a), le nombre de pièces n prélevées pour former l'échantillon est inférieur au nombre $N_0$ de pièces du lot ;
- A l'étape c), on calcule en outre une moyenne de la proportion de pièces en non-conformité dans le lot en pondérant le nombre de pièces de l'échantillon mesurées en conformité par la valeur 0, en pondérant le nombre de pièces de l'échantillon mesurées en non-conformité par la valeur de l'espérance mathématique calculée, et en pondérant le nombre de pièces du lot non-prélevées dans l'échantillon par la valeur de l'espérance mathématique calculée ;

- A l'étape d), on compare la moyenne de la proportion de pièces en non-conformité dans le lot à la valeur seuil de proportion de pièces en non-conformité ;
- A l'étape e), on accepte ou on refuse le lot de pièces produites en fonction des résultats de comparaison de l'étape d).

Ce dernier exemple illustre bien la puissance, l'utilité et les gains avérés pour le producteur d'une caractérisation adéquate et précise des risques associés à une situation d'allègement de contrôle, dans laquelle il convient de prendre en compte les incertitudes liées au fait que seule une partie de la production aura été mesurée.

Le procédé proposé peut être mis en oeuvre dans une chaîne de fabrication de pièces, pouvant être totalement ou partiellement automatisée, où des contrôles en cours de production permettent de piloter le flux de fabrication, c'est-à-dire ajuster les conditions de fabrication pour s'assurer que les pièces fabriquées continuent de répondre aux critères de qualités requis.

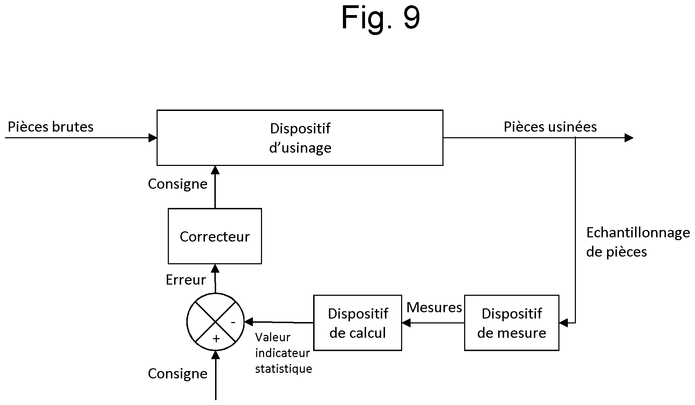

La figure 9 donne un exemple d'une telle chaine de fabrication dans laquelle un dispositif d'usinage, comme par exemple une machine 5 axes, est utilisé pour fabriquer des pièces selon une consigne spécifique. La consigne spécifique peut par exemple porter sur une dimension caractéristique particulière. A la place du dispositif d'usinage, il pourrait bien entendu être utilisé un dispositif de fabrication non limité à de l'usinage de pièces.

Dans cette chaine automatisée de production, des pièces sont prélevées en sortie du dispositif d'usinage afin de former un échantillon et transmises à un dispositif de mesure qui mesure une ou plusieurs dimensions caractéristiques de chaque pièce de l'échantillon prélevé. Un tel dispositif de mesure peut par exemple être une machine de mesure tridimensionnelle ayant des capteurs qui mesurent automatiquement les dimensions caractéristiques souhaitées de chacune des pièces.

Les données de mesures issues du dispositif de mesure sont ensuite transmises à un dispositif de calcul qui les traite pour calculer un ou plusieurs indicateurs statistiques représentatifs d'une des dimensions caractéristiques des pièces.

Dans le cas présenté ici, le dispositif de calcul va permettre aussi calculer, à partir des valeurs de l'indicateur statistique, l'espérance mathématique de la proportion de pièces en non-conformité par rapport à la spécification sur la dimension caractéristique.

La valeur calculée de l'espérance mathématique de la proportion de pièces en non-conformité est comparée à une valeur seuil de proportion de pièces en non-conformité, et les résultats de cette comparaison sont utilisés pour éventuellement ajuster les paramètres d'entrée du dispositif d'usinage. Cet ajustement des paramètres d'entrée du dispositif d'usinage peut par exemple être effectué selon la stratégie décrite plus haut.

**Revendications**

1. Procédé de fabrication d'une population de pièces produites avec un dispositif de fabrication, basé sur l'analyse d'au moins un indicateur statistique représentatif d'une dimension caractéristique des pièces, comprenant les étapes automatisées suivantes consistant à :

   a) prélever parmi les pièces produites avec le dispositif de fabrication un échantillon comprenant un nombre n de pièces ;
   b) mesurer, avec un dispositif de mesure, la dimension caractéristique de chaque pièce de l'échantillon, et calculer pour l'échantillon une valeur mesurée de l'indicateur statistique ;
   c) calculer, avec un dispositif de calcul, une espérance mathématique de la proportion de pièces en non-conformité par rapport à une spécification sur la dimension caractéristique, ledit calcul étant effectué à partir de la valeur mesurée de l'indicateur statistique pour l'échantillon prélevé et du nombre n de pièces de l'échantillon, et calculer en outre un intervalle de confiance sur l'indicateur statistique à un risque unilatéral $\alpha$ près, où $\alpha$ est compris entre 0 et 1, ledit calcul étant effectué à partir de la valeur mesurée de l'indicateur statistique pour l'échantillon prélevé et du nombre n de pièces de l'échantillon ;
   d) comparer, avec un dispositif de pilotage, l'espérance mathématique de la proportion de pièces en non-conformité calculée à une valeur seuil de proportion de pièces en non-conformité, et comparer en outre la borne inférieure de l'intervalle de confiance calculé à une valeur seuil de l'indicateur statistique correspondant à la valeur seuil de proportion de pièces en non-conformité ;

e) piloter, avec le dispositif de pilotage, la fabrication des pièces en fonction des résultats de comparaison de l'étape d), de sorte que :

- Si la borne inférieure de l'intervalle de confiance calculé est supérieure à la valeur seuil de l'indicateur statistique, alors aucune modification du flux de fabrication de pièces n'est effectuée ;
- Si la borne inférieure de l'intervalle de confiance calculé est inférieure à la valeur seuil de l'indicateur statistique et que l'espérance mathématique de la proportion de pièces en non-conformité calculée pour l'échantillon est supérieure à la valeur seuil de proportion de pièces en non-conformité, alors des paramètres de réglage du dispositif de fabrication sont ajustés et/ou le nombre de pièces prélevées lors d'un prélèvement ultérieur d'échantillon est augmenté ;
- Si l'espérance mathématique de la proportion de pièces en non-conformité calculée pour l'échantillon est inférieure à la valeur seuil de proportion de pièces en non-conformité, alors le flux de fabrication de pièces est stoppé.

**2.** Procédé selon la revendication 1, dans lequel le au moins un indicateur statistique est un indice de capabilité Cpk défini par la formule :

$$Cpk = \frac{Min(TS - \mu\,;\mu - TI)}{3\sigma}$$

où :

- $\mu$ est la moyenne des dimensions caractéristiques mesurées sur les pièces de l'échantillon prélevé ;
- $\sigma$ est l'écart-type des dimensions caractéristiques mesurées sur les pièces de l'échantillon prélevé ;
- TS est une tolérance supérieure de la dimension caractéristique mesurée ;
- TI est une tolérance inférieure de la dimension caractéristique mesurée.

**3.** Procédé selon la revendication 2, dans lequel à l'étape c), il est pris pour hypothèse que la population des pièces suit une loi normale, et les calculs suivants sont effectués :

c1) Calcul de la fonction de répartition inverse $G_{ppm}$ de la proportion de pièces en non-conformité que l'on risque d'accepter en ne connaissant que la valeur mesurée $\widetilde{Cpk}$ de l'indice de capabilité sur la dimension caractéristique pour l'échantillon de n pièces, selon la formule :

$$G_{ppm} = 10^6 \left[ 1 - LOI.NORMALE.STANDARD\left( 3 * \widetilde{Cpk}\left[ 1 + z_\alpha \sqrt{\frac{1}{9n\widetilde{Cpk}^2} + \frac{1}{2(n-1)}} \right] \right) \right.$$
$$\left. + LOI.NORMALE.STANDARD\left( -3 * \widetilde{Cpk}\left[ 1 + z_\alpha \sqrt{\frac{1}{9n\widetilde{Cpk}^2} + \frac{1}{2(n-1)}} \right] \right) \right]$$

où $\alpha$ E [0; 1] et $z_\alpha$ représente le $\alpha^{\text{ème}}$ percentile de la loi normale standard ;

c2) Calcul de l'espérance mathématique de la proportion de pièces en non-conformité en prenant l'intégrale entre 0 et 1 de la fonction de répartition inverse $G_{ppm}$ selon *a*.

**4.** Procédé selon la revendication 2, dans lequel à l'étape c), il est pris pour hypothèse que la population des pièces suit une loi normale, et l'espérance mathématique de la proportion de pièces en non-conformité est déterminée à partir d'un calcul de la densité de probabilité de la proportion de pièces en non-conformité, où :

- le risque d'avoir $X_0$ ppm de pièces en non-conformité dans la population globale est considéré comme correspondant à un indique de capabilité donné par la formule :

$$Cpk_0 = \frac{1}{3} LOI.NORMALE.STANDARD.INVERSE\left(1 - \frac{X_0}{2.10^6}\right)$$

- la densité de probabilité de la proportion de pièces en non-conformité est déterminée en se basant sur un percentile p de l'intervalle de confiance calculé à partir de la valeur mesurée $\widetilde{Cpk}$ de l'indice de capabilité sur la dimension caractéristique pour l'échantillon de n pièces selon la formule :

$$p = LOI.NORMALE.STANDARD\left(\frac{Cpk_0 - \widetilde{Cpk}}{\sqrt{\frac{1}{9n\widetilde{Cpk}^2} + \frac{1}{2(n-1)}}}\right)$$

**5.** Procédé selon la revendication 2, dans lequel à l'étape c), il est pris pour hypothèse que la population des pièces suit une loi normale, et les calculs suivants sont effectués :

c1) Simulation d'une pluralité de tirages de population réelle à partir d'une moyenne $\tilde{\mu}$ et d'un écart-type $\tilde{\sigma}$ de la dimension caractéristique mesurée sur l'échantillon de n pièces en prenant pour hypothèse que la variable aléatoire $\sqrt{n}\left(\frac{\tilde{\mu}-\mu}{\tilde{\sigma}}\right)$ suit une loi de Student à $n$ - 1 degrés de liberté, et que la variable aléatoire $(n-1)\frac{\tilde{\sigma}^2}{\sigma^2}$ est distribuée suivant une loi du $\chi^2$ à $n$ - 1 degrés de liberté, où $\mu$ et $\sigma$ sont respectivement la moyenne réelle et l'écart-type réel de la dimension caractéristique pour la population ; puis
c2) Calcul de la proportion de pièces en non-conformité pour chaque tirage simulé, et calcul de la moyenne de la proportion de pièces en non-conformité sur l'ensemble des tirages simulés pour en déduire l'espérance mathématique de la proportion de pièces en non-conformité.

**6.** Procédé selon l'une quelconque des revendications des revendications 1 à 5, dans lequel le flux de fabrication de pièces correspond à un lot ayant un nombre de pièces $N_0$ déterminé, où :

- A l'étape a), le nombre de pièces n prélevées pour former l'échantillon est inférieur au nombre $N_0$ de pièces du lot ;
- A l'étape c), il est en outre calculé une moyenne de la proportion de pièces en non-conformité dans le lot en pondérant le nombre de pièces de l'échantillon mesurées en conformité par la valeur 0, en pondérant le nombre de pièces de l'échantillon mesurées en non-conformité par la valeur de l'espérance mathématique calculée, et en pondérant le nombre de pièces du lot non-prélevées dans l'échantillon par la valeur de l'espérance mathématique calculée ;
- A l'étape d), la moyenne de la proportion de pièces en non-conformité dans le lot est comparée à la valeur seuil de proportion de pièces en non-conformité ;
- A l'étape e), le lot de pièces produites est accepté ou refusé en fonction des résultats de comparaison de l'étape d).

**Patentansprüche**

**1.** Verfahren zur Herstellung einer Population von Teilen, produziert mit einer Herstellungsvorrichtung, basierend auf der Analyse mindestens eines statistischen Indikators, der für eine charakteristische Abmessung der Teile repräsentativ ist, umfassend die folgenden automatisierten Schritte, die darin bestehen:

a) Entnehmen, aus den mit der Herstellungsvorrichtung produzierten Teilen, einer Probe, die eine Anzahl n von Teilen umfasst,
b) Messen, mit einer Messvorrichtung, der charakteristischen Abmessung jedes Teils der Probe, und Berechnen, für die Probe, eines gemessenen Werts des statistischen Indikators,
c) Berechnen, mit einer Rechenvorrichtung, eines Erwartungswerts des Anteils nichtkonformer Teile in Bezug auf eine Spezifikation hinsichtlich der charakteristischen Abmessung, wobei die Berechnung auf der Basis des gemessenen Werts des statistischen Indikators für die entnommene Probe und der Anzahl n von Teilen der Probe durchgeführt wird, und ferner Berechnen eines Konfidenzintervalls hinsichtlich des statistischen Indikators mit einem einseitigen Risiko von zirka a, wobei a zwischen 0 und 1 inbegriffen ist, wobei die Berechnung auf der Basis des gemessenen Werts des statistischen Indikators für die entnommene Probe und der Anzahl n von Teilen der Probe durchgeführt wird,

d) Vergleichen, mit einer Steuervorrichtung, des berechneten Erwartungswerts des Anteils nichtkonformer Teile mit einem Grenzwert des Anteils nichtkonformer Teile und Vergleichen, ferner, der unteren Grenze des berechneten Konfidenzintervalls mit einem Grenzwert des statistischen Indikators, der dem Grenzwert des Anteils nichtkonformer Teile entspricht,

e) Steuern, mit der Steuervorrichtung, der Herstellung der Teile in Abhängigkeit der Vergleichsergebnisse von Schritt d), so dass:

- wenn die untere Grenze des berechneten Konfidenzintervalls größer als der Grenzwert des statistischen Indikators ist, keine Änderung des Teileherstellungsstroms vorgenommen werden,
- wenn die untere Grenze des berechneten Konfidenzintervalls kleiner als der Grenzwert des statistischen Indikators und der für die Probe berechnete Erwartungswert des Anteils nichtkonformer Teile größer als der Grenzwert des Anteils nichtkonformer Teile ist, die Einstellungsparameter der Herstellungsvorrichtung angepasst werden und/oder die Anzahl der bei einer späteren Probenahme entnommenen Teile erhöht wird,
- wenn der für die Probe berechnete Erwartungswert des Anteils nichtkonformer Teile kleiner als der Grenzwert des Anteils nichtkonformer Teile ist, der Teileherstellungsstrom gestoppt wird.

2. Verfahren nach Anspruch 1, wobei der mindestens eine statistische Indikator ein Fähigkeitsindex Cpk ist, der bestimmt ist durch die Formel:

$$Cpk = \frac{Min(TS - \mu\,;\mu - TI)}{3\sigma}$$

wobei:

- $\mu$ der Mittelwert der bei den Teilen der entnommenen Probe gemessenen charakteristischen Abmessungen ist,
- $\sigma$ die Standardabweichung der bei den Teilen der entnommenen Probe gemessenen charakteristischen Abmessungen ist,
- TS eine größere Toleranz der gemessenen charakteristischen Abmessung ist,
- TI eine kleinere Toleranz der gemessenen charakteristischen Abmessung ist.

3. Verfahren nach Anspruch 2, wobei in Schritt c) die Hypothese gilt, dass die Population der Teile einer Normalverteilung folgt, und die folgenden Berechnungen durchgeführt werden:

c1) Berechnung der inversen Verteilungsfunktion $G_{ppm}$ des Anteils nichtkonformer Teile, die eventuell akzeptiert werden, durch Kenntnis nur des gemessenen Werts $\widetilde{Cpk}$ des Fähigkeitsindexes hinsichtlich der charakteristischen Abmessung für die Probe von n Teilen gemäß der Formel:

$$G_{ppm} = 10^6 \left[ 1 - \text{STANDARDNORMALVERTEILUNG}\left( 3 * \widetilde{Cpk}\left[ 1 + z_\alpha \sqrt{\frac{1}{9n\widetilde{Cpk}^2} + \frac{1}{2(n-1)}} \right] \right) \right.$$
$$\left. + \text{STANDARDNORMALVERTEILUNG}\left( -3 * \widetilde{Cpk}\left[ 1 + z_\alpha \sqrt{\frac{1}{9n\widetilde{Cpk}^2} + \frac{1}{2(n-1)}} \right] \right) \right]$$

wobei $\alpha \in [0;1]$ und $z_\alpha$ das a. Perzentil der Standardnormalverteilung darstellt.

c2) Berechnen des Erwartungswerts des Anteils nichtkonformer Teile mit dem Integral zwischen 0 und 1 der inversen Verteilungsfunktion $G_{ppm}$ gemäß a.

**4.** Verfahren nach Anspruch 2, wobei in Schritt c) die Hypothese gilt, dass die Population der Teile einer Normalverteilung folgt und der Erwartungswert des Anteils nichtkonformer Teile auf der Basis einer Berechnung der Wahrscheinlichkeitsdichte des Anteils nichtkonformer Teile bestimmt wird, wobei:

- das Risiko, $X_0$ ppm nichtkonforme Teile in der globalen Population zu haben, als einem Fähigkeitsindex entsprechend betrachtet wird, der durch die folgende Formel gegeben ist:

$$Cpk_0 = \frac{1}{3} \text{ INVERSE STANDARDNORMALVERTEILUNG}\left(1 - \frac{X_0}{2.10^6}\right)$$

- die Wahrscheinlichkeitsdichte des Anteils nichtkonformer Teile auf der Basis eines Perzentils p des Konfidenzintervalls, berechnet auf der Basis des gemessenen Werts $\widetilde{Cpk}$ des Fähigkeitsindexes hinsichtlich der charakteristischen Abmessung für die Probe von n Teilen, bestimmt wird gemäß der Formel:

$$p = \text{STANDARDNORMALVERTEILUNG}\left(\frac{Cpk_0 - \widetilde{Cpk}}{\sqrt{\frac{1}{9n\widetilde{Cpk}^2} + \frac{1}{2(n-1)}}}\right)$$

**5.** Verfahren nach Anspruch 2, wobei in Schritt c) die Hypothese gilt, dass die Population der Teile einer Normalverteilung folgt, und die folgenden Berechnungen durchgeführt werden:

c1) Simulation einer Vielzahl von Auszügen realer Population auf der Basis eines Mittelwerts $\tilde{\mu}$ und einer Standardabweichung $\tilde{\sigma}$ der gemessenen charakteristischen Abmessung hinsichtlich der Probe von n Teilen mit der Hypothese, dass die Zufallsvariable $\sqrt{n}\left(\frac{\tilde{\mu}-\mu}{\tilde{\sigma}}\right)$ einem Student-Gesetz mit n - 1 Freiheitsgraden folgt, und dass die Zufallsvariable $(n-1)\frac{\tilde{\sigma}^2}{\sigma^2}$ gemäß einem Gesetz $X^2$ mit n - 1 Freiheitsgraden verteilt ist, wobei µ und σ jeweils der reale Mittelwert und die reale Standardabweichung der charakteristischen Abmessung für die Population sind, dann

c2) Berechnung des Anteils nichtkonformer Teile für jeden simulierten Auszug und Berechnung des Mittelwerts des Anteils nichtkonformer Teile hinsichtlich der Gesamtheit der simulierten Auszüge, um daraus den Erwartungswert des Anteils nichtkonformer Teile abzuleiten.

**6.** Verfahren nach einem der Ansprüche 1 bis 5, wobei der Teileherstellungsstrom einem Los mit einer bestimmten Teileanzahl $N_0$ entspricht, wobei:

- in Schritt a) die Anzahl n entnommener Teile, um die Probe zu bilden, kleiner als die Anzahl $N_0$ der Teile des Loses ist,
- in Schritt c) ferner ein Mittelwert des Anteils nichtkonformer Teile in dem Los durch Wichten der Anzahl der gemessenen konformen Teile der Probe mit dem Wert 0, durch Wichten der Anzahl der gemessenen nicht konformen Teile der Probe mit dem Wert des berechneten Erwartungswerts und durch Wichten der Anzahl der nicht entnommenen Teile des Loses in der Probe mit dem Wert des berechneten Erwartungswerts berechnet wird,
- in Schritt d) der Mittelwert des Anteils nichtkonformer Teile in dem Los mit dem Grenzwert des Anteils nichtkonformer Teile verglichen wird,
- in Schritt e) das Los hergestellter Teile in Abhängigkeit der Vergleichsergebnisse von Schritt d) genehmigt oder abgelehnt wird.

## Claims

**1.** A method for manufacturing a population of parts produced with a manufacturing device, based on analysis of at least one statistical indicator representative of a characteristic dimension of parts, comprising the following automated steps consisting in:

a) taking from among the parts produced with the manufacturing device a sample comprising a number n of parts is taken;

b) measuring, with a measuring device, the characteristic dimension of each part of the sample, and calculating for the sample a measured value of the statistical indicator;

c) calculating, with a calculation device, a mathematical expectation of the proportion of parts in non-conformity relative to a specification on the characteristic dimension, said calculation being made from the measured value of the statistical indicator for the sample taken and the number n of parts of the sample, and further calculating a confidence interval on the statistical indicator unless a unilateral risk α, where α is between 0 and 1, said calculation being made from the measured value of the statistical indicator for the sample taken and the number n of parts of the sample;

d) comparing, with a regulating device, a mathematical expectation of the proportion of parts in non-conformity calculated to a threshold value of proportion of parts in non-conformity, and further comparing the lower limit of the calculated confidence interval to a threshold value of the statistical indicator corresponding to the threshold value of proportion of parts in non-conformity;

e) regulating, with the regulating device, the manufacturing of parts as a function of the results of comparison of step d), such that:

- If the lower limit of the calculated confidence interval is greater than the threshold value of the statistical indicator, no modification is made to the manufacturing flow of parts;
- If the lower limit of the calculated confidence interval is less than the threshold value of the statistical indicator and the mathematical expectation of the proportion of parts in non-conformity calculated for the sample is greater than the threshold value of proportion of parts in non-conformity, regulating parameters of the manufacturing device are adjusted and/or the number of parts sampled during later sampling of a sample is increased;
- If the mathematical expectation of the proportion of parts in non-conformity calculated for the sample is less than the threshold value of proportion of parts in non-conformity, the manufacturing flow of parts is discontinued.

2. The method as claimed in Claim 1, in which the at least a statistical indicator is a capability index Cpk defined by the formula:

$$Cpk = \frac{Min(TS - \mu\,;\mu - TI)}{3\sigma}$$

where:

- $\mu$ is the average of the characteristic dimensions measured on the parts of the sample taken;
- $\sigma$ is the standard deviation of the characteristic dimensions measured on the parts of the sample taken;
- TS is an upper tolerance of the characteristic dimension measured;
- TI is a low tolerance of the characteristic dimension measured.

3. The method as claimed in Claim 2, in which at step c), it is assumed that the population of the parts follows a normal law, and the following calculations are made:

c1) Calculation of the function of inverse distribution $G_{ppm}$ of the proportion of parts in non-conformity which risk being accepted by knowing only the measured value $\widetilde{Cpk}$ of the capability index on the characteristic dimension for the sample of n parts, according to the formula:

$$G_{ppm} = 10^6 \left[ 1 - STANDARD.NORMAL.DISTRIBUTION \left( 3 \right. \right.$$

$$\left. * \widetilde{Cpk} \left[ 1 + z_\alpha \sqrt{\frac{1}{9n\widetilde{Cpk}^2} + \frac{1}{2(n-1)}} \right] \right)$$

$$+ STANDARD.NORMAL.DISTRIBUTION (-3$$

$$\left. \left. * \widetilde{Cpk} \left[ 1 + z_\alpha \sqrt{\frac{1}{9n\widetilde{Cpk}^2} + \frac{1}{2(n-1)}} \right] \right) \right]$$

where $\alpha \in [0; 1]$ and $z_\alpha$ represents the $\alpha^{th}$ percentile of the standard normal law;
c2) Calculation of the mathematical expectation of the proportion of parts in non-conformity by taking the integral between 0 and 1 of the function of inverse distribution $G_{ppm}$ according to $\alpha$.

4. The method as claimed in Claim 2, in which at step c) it is assumed that the population of parts follows a normal law, and the mathematical expectation of the proportion of parts in non-conformity is determined from calculation of the density of probability of the proportion of parts in non-conformity, where:

- The risk of having $X_0$ ppm of parts in non-conformity in the overall population is considered to correspond to an indication of capability given by the formula:

$$Cpk_0 = \frac{1}{3} INVERSE.STANDARD.NORMAL.DISTRIBUTION (1 - \frac{X_0}{2.10^6}))$$

- The density of probability of the proportion of parts in non-conformity is determined based on a percentile p of the calculated confidence interval from the measured value $\widetilde{Cpk}$ of the capability index on the characteristic dimension for the sample of n parts according to the formula:

$$p = STANDARD.NORMAL.DISTRIBUTION (\frac{Cpk_0 - \widetilde{Cpk}}{\sqrt{\frac{1}{9n\widetilde{Cpk}^2} + \frac{1}{2(n-1)}}})$$

5. The method as claimed in Claim 2, in which at step c) it is assumed that the population of the parts follows a normal law, and the following calculations are made:

c1) Simulation of a plurality of drawings of real population from an average $\widetilde{\mu}$ and a standard deviation $\widetilde{\sigma}$ of the

characteristic dimension measured on the sample of n parts assuming that the random variable $\sqrt{n}\left(\frac{\widetilde{\mu}-\mu}{\widetilde{\sigma}}\right)$

follows a Student law at n - 1 degrees of liberty, and the random variable $(n-1)\frac{\widetilde{\sigma}^2}{\sigma^2}$ is distributed as per a law of the $\chi^2$ at $n$ - 1 degrees of liberty, where $\mu$ and $\sigma$ are respectively the real average and the real standard deviation of the characteristic dimension for the population; then
c2) Calculation of the proportion of parts in non-conformity for each simulated drawing, and calculation of the average of the proportion of parts in non-conformity on all of the simulated drawings to deduce therefrom the mathematical expectation of the proportion of parts in non-conformity.

**6.** The method as claimed in any one of Claims 1 to 5, in which the manufacturing flow of parts corresponds to a batch having a determined number of parts $N_0$, where:

- At step a), the number of parts n sampled to form the sample is less than the number $N_0$ of parts of the batch;
- At step c), an average of the proportion of parts in non-conformity in the batch is calculated also by weighting the number of parts of the sample measured in conformity by the value 0, by weighting the number of parts of the sample measured in non-conformity by the value of the calculated mathematical expectation, and by weighting the number of parts of the non-sampled batch in the sample by the value of the calculated mathematical expectation;
- At step d), the average of the proportion of parts in non-conformity in the batch is compared to the threshold value of proportion of parts in non-conformity;
- At step e), the batch of parts produced as a function of the results of comparison of step d) is accepted or refused.

## FIG. 1

| Taille de l'échantillon | Cpk mesuré | | |
|---|---|---|---|
| 5 | 1 | 2.2 | 2.44 |
| 10 | 1 | 1.36 | 1.68 |
| 15 | 1 | 1.21 | 1.49 |
| 20 | 1 | 1.15 | 1.4 |
| 25 | 1 | 1.12 | 1.34 |
| 30 | 1 | 1.1 | 1.3 |
| 40 | 1 | 1.07 | 1.25 |
| 50 | 1 | 1.06 | 1.22 |
| 75 | 1 | 1.04 | 1.18 |
| 100 | 1 | 1.03 | 1.15 |
| 200 | 1 | 1.02 | 1.1 |
| 250 | 1 | 1.02 | 1.09 |
| 400 | 1 | 1.01 | 1.07 |

$Cpk_{mini}$  Z3  $Cpk_{espérance}$  Z2  $Cpk_{intervalle}$  Z1

## FIG. 2

| Taille de l'échantillon | Cpk mesuré | | |
|---|---|---|---|
| 5 | 1.33 | 3.216 | 3.22 |
| 10 | 1.33 | 2.05 | 2.21 |
| 15 | 1.33 | 1.77 | 1.95 |
| 20 | 1.33 | 1.64 | 1.84 |
| 25 | 1.33 | 1.58 | 1.77 |
| 30 | 1.33 | 1.53 | 1.72 |
| 40 | 1.33 | 1.48 | 1.65 |
| 50 | 1.33 | 1.45 | 1.61 |
| 75 | 1.33 | 1.41 | 1.55 |
| 100 | 1.33 | 1.39 | 1.52 |
| 200 | 1.33 | 1.36 | 1.46 |
| 250 | 1.33 | 1.36 | 1.45 |
| 400 | 1.33 | 1.35 | 1.42 |

$Cpk_{mini}$  Z3  $Cpk_{espérance}$  Z2  $Cpk_{intervalle}$  Z1

# FIG. 3

# FIG. 4

FIG. 5

EP 3 227 644 B1

EP 3 227 644 B1

## FIG. 6

Densité de probabilité

Espérance (moyenne) = 31 ppm

95ème percentile = 182 ppm

Nombre de ppm engendrés

Densité de probabilité

## FIG. 7

EP 3 227 644 B1

## FIG. 8

Domaine à l'intérieur duquel
la population réelle possède 95 %
de chances de se trouver
pour la population de référence

Simulation de 10 000
populations

# Fig. 9

Pièces brutes → **Dispositif d'usinage** → Pièces usinées

Consigne

Correcteur

Erreur

Consigne

Valeur indicateur statistique

**Dispositif de calcul** ← Mesures ← **Dispositif de mesure** ← Echantillonnage de pièces

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5655110 A